# EUROPÄISCHE PATENTSCHRIFT

(11) **EP 4 681 058 B1**
(45) Veröffentlichungstag und Bekanntmachung des Hinweises auf die Patenterteilung: **25.11.2026**
(21) Anmeldenummer: 24768048.1
(22) Anmeldetag: 05.09.2024
(51) Int. Cl.: G06F 3/12, G06K 5/00, G06K 7/14

(54) **VERFAHREN ZUM PRÜFEN EINER IN EINER DRUCKMASCHINE AUF EINEM VERPACKUNGSMATERIAL GEDRUCKTEN KENNZEICHNUNG SOWIE EIN SYSTEM ZUM AUSFÜHREN DIESES VERFAHRENS**
METHOD FOR VERIFYING A MARKING PRINTED ON A PACKAGING MATERIAL IN A PRINTING MACHINE, AND SYSTEM FOR CARRYING OUT SAID METHOD
PROCÉDÉ DE VÉRIFICATION D'UN MARQUAGE IMPRIMÉ SUR UN MATÉRIAU D'EMBALLAGE DANS UNE MACHINE D'IMPRESSION, ET SYSTÈME DE MISE EN OEUVRE DUDIT PROCÉDÉ

(30) Priorität: 21.12.2023 DE 102023136248
(43) Veröffentlichungstag der Anmeldung: 21.01.2026
(73) Patentinhaber: Koenig & Bauer AG, 97080 Würzburg (DE)
(72) Erfinder: SINGER, Stefan, 01445 Radebeul (DE)
(74) Vertreter: Koenig & Bauer AG
(86) Internationale Anmeldenummer: PCT/EP2024/074812
(87) Internationale Veröffentlichungsnummer: WO 2025/131350

(56) Entgegenhaltungen:
- US-A1- 2020 082 131
- US-A1- 2022 244 893

## Beschreibung

Die Erfindung betrifft ein Verfahren zum Prüfen einer in einer Druckmaschine auf einem Verpackungsmaterial gedruckten Kennzeichnung gemäß dem Oberbegriff des Anspruches 1 sowie ein System zum Ausführen dieses Verfahrens gemäß Anspruch 5.

In der Materialwirtschaft werden Verpackungen von Waren aus logistischen Gründen i.d.R. mit einer Kennzeichnung versehen, wobei diese Kennzeichnung z. B. als ein eindimensionaler Code wie ein Strichcode bzw. Barcode oder als ein zweidimensionaler Code wie ein DataMatrix-Code ausgebildet ist. Da eine derartige Kennzeichnung auf einer Verpackung insbesondere drucktechnisch, d. h. in einer Druckerei mit einer Druckmaschine angebracht wird und eine ausreichend gute Lesbarkeit dieser Kennzeichnung, insbesondere ihre Maschinenlesbarkeit, im Materialfluss für eine erfolgreiche Logistik sichergestellt sein muss, hat man Anforderungen an die Druckqualität solcher Kennzeichnungen in Normen festgelegt. So wurden Normen wie z. B. die Norm ISO/IEC 15416 geschaffen, die Anforderungen an die Druckqualität von Strichcodes definiert, und die Norm ISO/IEC 15415, die Anforderungen an die Druckqualität von Matrixcodes definiert. Der Begriff ISO bezeichnet die Internationale Organisation für Normung, wobei diese Organisation ein globales Netzwerk der weltweit führenden Normungsorganisationen ist und nationale Normungsgremien aus der ganzen Welt zusammenbringt.

Viele Kunden von Verpackungsprodukten verlangen von einer Druckerei, die das dem Verpackungsprodukt zugrundeliegende Verpackungsmaterial mit einer Kennzeichnung versieht, jeweils ein Zertifikat, das die Einhaltung der die jeweilige Kennzeichnung betreffenden Norm belegt, d. h. bestätigt und dokumentiert. Zum Erbringen dieses Nachweises sind in Druckereien einsatzfähige zertifizierte Code-Prüfsysteme für 1D Barcodes und 2D Matrix Codes bekannt und erhältlich, so z. B. von der Fa. REA Elektronik GmbH in D-64367 Mühltal (Deutschland). Das Ergebnis der Prüfung eines von einem derartigen Code-Prüfsystem geprüften Codes wird z. B. elektronisch gespeichert und kann dem Kunden des mit dem betreffenden Code versehenen Verpackungsmaterials als Nachweis für die Einhaltung der entsprechenden Norm zur Verfügung gestellt werden.

Derartige Code-Prüfsysteme sind typischerweise "stand alone"-Prüfgeräte, d. h. sie arbeiten autark und losgelöst von zum Ausführen eines Druckauftrages erforderlichen Vorrichtungen. Insbesondere besteht kein Datenaustausch mit der die betreffende Kennzeichnung auf dem Verpackungsmaterial anbringenden Druckmaschine. Beim Einsatz dieser autark arbeitenden Code-Prüfsysteme ist der Aufwand für das Prüfen von mit einer Kennzeichnung bedrucktem Verpackungsmaterial in einer Druckerei nicht unerheblich, da es bedeutet, z. B. einen mit der betreffenden Kennzeichnung bedruckten Druckbogen i.d.R. aus seinem Produktionsfluss auszuschleusen und zumindest die betreffende Kennzeichnung mit dem Prüfgerät abseits des Transportweges des Druckbogens durch die Druckmaschine zu scannen. Des Weiteren kommt erschwerend hinzu, dass ein Druckbogen häufig mehrere Nutzen aufweist, wobei vorzugsweise jeder einzelne Nutzen des betreffenden Druckbogens die betreffende Kennzeichnung oder zumindest eine von mehreren möglichen Kennzeichnungen aufweist. Die Erzeugung des geforderten Nachweises des normgerechten Drucks und eine Ablage der zugehörigen Dokumentation ist daher sehr aufwändig.

Es ist zwar gängige Praxis, dass die jeweilige Position der zu prüfenden Codes auf dem Druckbogen aus Daten einer Druckvorstufe berechnet oder bereitgestellt werden können. Jedoch entstehen für eine Ermittlung und Bereitstellung dieser Positionsdaten an ein die Prüfung durchführendes als "stand alone"-Prüfgerät ausgebildetes Code-Prüfsystem zusätzliche Aufwände.

Durch die DE 20 2012 102 237 U1 ist eine Kontrollvorrichtung für eine Kennzeichnung bekannt, mit einer Erfassungs- und Verarbeitungseinrichtung zur Erfassung der Kennzeichnung und mit einer Layouteinrichtung zur Erstellung eines Layouts der Kennzeichnung, wobei die Kontrollvorrichtung eine Datenkonvertereinrichtung umfasst, welche derart ausgebildet ist, dass sie aus Daten zum Erstellen der Kennzeichnung Prüfdaten erzeugt, um die Erfassungs- und Verarbeitungseinrichtung zu steuern.

Durch die DE 10 2014 210 690 A1 ist ein Verfahren zur Identifikation von Druckkontrollelementen für die Qualitätsdatenerfassung bekannt, wobei das Verfahren folgende Schritte umfasst:
- Kodieren von Positionsangaben in einen von Menschen lesbaren Identifikationscode
- Kodieren von spezifischen Druckauftragsinformationen und des von Menschen lesbaren Identifikationscodes in einen maschinenlesbaren Datencode
- Positionieren des maschinenlesbaren Datencodes und des Identifikationscodes neben ihrem zugehörigen Druckkontrollelement auf dem Drucksubstrat
- Fotografieren des gedruckten Druckkontrollelementes und des nebenstehenden maschinenlesbaren Datencodes mittels der Angaben des nebenstehenden Identifikationscodes und Verarbeiten der Daten mit einem mobilen Kommunikationsmittel mit Kamerafunktion und einer Kommunikationsschnittstelle
- Exportieren der erzeugten Bilddaten auf einen Supportrechner über die Kommunikationsschnittstelle des mobilen Kommunikationsmittels
- Dekodieren der maschinenlesbaren Datencodes
- Analysieren der Bilddaten auf dem Supportrechner mittels der aus dem dekodierten maschinenlesbaren Datencode gewonnenen Informationen
- Übermittlung der Analyseergebnisse vom Supportrechner an das mobile Kommunikationsmittel
- Korrektur der anhand der Bildanalyse gefundenen Fehleinstellungen in der die Druckerzeugnisse produzierenden Druckmaschine.

Durch die DE 697 25 665 T2 ist ein Strichcode-Drucksystem bekannt, mit einer Druckeinheit zum Drucken eines Strichcodes, und einer Prüfeinheit, die unabhängig von der Druckeinheit betrieben wird und den ausgedruckten Strichcode überprüft, wobei die Druckeinheit eine Einstelleinrichtung zur Einstellung von Bedingungen für einen auszudruckenden Strichcode in der Prüfeinheit vor dem Drucken des Strichcodes, und eine Steuereinrichtung aufweist, die eine Fehlerverarbeitung durchführt, wenn eine Strichcode-Lesefehlermeldung von der Prüfeinheit erhalten wird, wobei die Prüfeinheit eine Prüfeinrichtung zum mehrfachen Auslesen des gedruckten Strichcodes in verschiedenen Positionen entsprechend den von der Einstelleinrichtung eingestellten Informationen und Überprüfung des Strichcodes, und eine Meldeeinrichtung aufweist, die der Druckeinheit eine Fehlermeldung übermittelt, wenn die Prüfeinrichtung die Feststellung trifft, dass ein fehlerhafter Strichcode vorliegt.

Durch die DE 10 2021 108 925 A1 ist eine Vorrichtung für eine Prüfung einer Kennzeichnung eines Produkts bekannt, wobei in einem Bilderfassungsschritt mit einer kalibrierten Prüfkamera mindestens ein Bild der auf einer Oberfläche des Produkts angeordneten Kennzeichnung erfasst wird, und wobei in einem Layoutprüfungsschritt über das mindestens eine aufgenommene Bild die Qualität der auf der Oberfläche aufgebrachten Kennzeichnung in Bezug auf statische Daten wie Position und maschinelle Lesbarkeit geprüft wird, wobei die Vorrichtung eine digitale Datenverarbeitungsanlage aufweist, die dazu eingerichtet ist, dass mit dem mindestens einen mit der Prüfkamera aufgenommenen Bild zusätzlich zu der Überprüfung der Qualität der Kennzeichnung in dem Layoutprüfungsschritt in einem Codeprüfungsschritt in der Kennzeichnung enthaltene variable Produktinformationen erfasst werden und die erfassten variablen Produktinformationen mit Referenzinformationen aus einer Referenzinformationsdatenbank verglichen werden, wobei mit dem Vergleich eine Übereinstimmungskenngröße ermittelt wird.

Durch die US 2002/0087574 A1 ist ein Verfahren zur maschinellen Prüfung der alphanumerischen Daten auf Etiketten unter Verwendung eines elektronischen Sensors bekannt, wobei der Sensor so programmiert ist, dass er Daten von den Etiketten erfasst und die erfassten Daten mit einer Mastervorlage vergleicht und so abweichende Etiketten identifiziert, wobei das Verfahren Folgendes in beliebiger Reihenfolge umfasst: a) Laden einer Master-Etikettenvorlagendatendatei in computerlesbarer Form auf ein Etikettenlesegerät oder Erstellen derselben darauf; und b) Laden gedruckter Etiketten in das Gerät; und anschließendes Scannen jedes Etiketts oder einer ausgewählten Untergruppe von Etiketten unter Verwendung eines Lesegeräts im Gerät, wobei die vom Lesegerät gelesenen Daten mit der Vorlagendatendatei verglichen werden und wobei das Gerät über einen Mechanismus zum Identifizieren eines gelesenen Etiketts verfügt, das nicht mit den in der Vorlagendatendatei enthaltenen Parametern übereinstimmt.

Durch die WO 2019/171070 A1 ist ein System zum Drucken und Prüfen von Produktetiketten bekannt, das Datenverarbeitungsmittel umfasst, die konfiguriert sind, a) um den Druck von Produktetiketten zu steuern, b) um die Erfassung und den Empfang von Bildern der gedruckten Etiketten durch ein Bilderfassungsgerät wie einen optischen Scanner zu steuern, und c) um die gedruckten Etiketten auf Mängel zu überprüfen, wobei jedes gedruckte Etikett einer Etikettenformatspezifikation für dieses Etikett entspricht, wobei das Etikett ein gemeinsames Layout aufweist und gedruckte produktbezogene Informationen umfasst, die sich in einem oder mehreren Bereichen auf dem Etikett befinden, wobei die Datenverarbeitungseinrichtung ein Etikettenprüfmodul umfasst, in dem ein Referenzbild des Etiketts bereitgestellt wird, und wobei das Prüfmodul so konfiguriert ist, dass die erfassten Bilder nacheinander mit dem Referenzbild gemäß vorbestimmten Qualitätskontrollindikatoren verglichen werden, wobei das Etikett zur Überprüfung oder Ablehnung markiert wird, wenn es nicht konform ist.

Durch die US 2020/082131 A1 ist ein System bekannt welches Feedback zur Druckqualität von Barcodes generiert.

Der Erfindung liegt die Aufgabe zugrunde, ein Verfahren zum Prüfen einer in einer Druckmaschine auf einem Verpackungsmaterial gedruckten Kennzeichnung sowie ein System zum Ausführen dieses Verfahrens zu schaffen.

Die Aufgabe wird erfindungsgemäß durch die Gegenstände mit den Merkmalen des Anspruches 1 oder 5 gelöst. Die jeweils abhängigen Ansprüche betreffen vorteilhafte Ausgestaltungen und/oder Weiterbildungen der gefundenen Lösung.

Die gefundene Lösung zeichnet sich u. a. durch eine datentechnische Vernetzung einer die betreffende Kennzeichnung druckenden Druckmaschine mit einem zertifizierten Prüfsystem und vorteilhafterweise auch mit einem mit der betreffenden Druckmaschine in Verbindung stehenden Management-Information-System (MIS) der Druckerei aus. Ein Management-Information-System ist ein computerunterstütztes Informationssystem, das wichtige Unternehmensinformationen, insbesondere betriebswirtschaftlich orientierte, vorzugsweise in digitaler Form bereit gestellte Unternehmensdaten, für eine Führungsebene des betreffenden Unternehmens - hier insbesondere einer Druckerei - sammelt und aufbereitet. Auf Basis dieser Informationen lassen sich Analysen durchführen, Probleme lösen oder strategische Entscheidungen treffen. Es liefert dem Unternehmen möglichst alle wichtigen Informationen, die es für die Aufrechterhaltung eines effizienten Betriebs benötigt. Beispiele hierfür sind das Controlling und weitere betriebliche Lenkungsaufgaben.

Die mit der Erfindung erzielbaren Vorteile bestehen folglich insbesondere darin, dass in Verbindung mit der Prüfung von auf Verpackungsmaterial normgerecht zu erstellenden Kennzeichnungen entstehende Aufwände reduziert werden. Insbesondere wird erreicht, dass der Prüfprozess in seiner Durchführung vereinfacht wird und dass ein Ablegen der aus dieser Prüfung resultierenden Prüfprotokolle automatisiert und sicher erfolgen kann.

Ein Ausführungsbeispiel der Erfindung ist in der einzigen Zeichnung dargestellt und wird im Folgenden näher beschrieben.

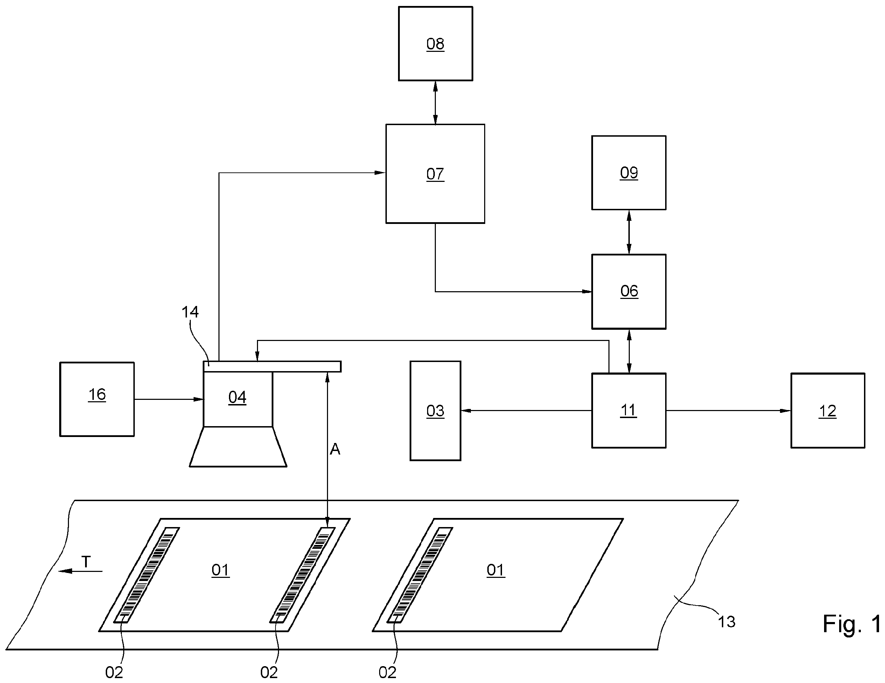

Fig. 1 verdeutlicht in einem Blockdiagramm beispielhaft und vereinfacht ein in einer Druckerei angeordnetes System zum Erstellen eines mit einem Zertifikat versehenen Prüfprotokolls von einer Prüfung einer in einer Druckmaschine 03 auf einem Verpackungsmaterial 01 gedruckten Kennzeichnung 02. Dabei wird diese Kennzeichnung 02 in einem von der Druckmaschine 03 ausgeführten Druckauftrag auf dem Verpackungsmaterial 01 insbesondere in Form eines eindimensionalen oder eines zweidimensionalen Codes ausgebildet. Das Verpackungsmaterial 01 ist z. B. als ein Druckbogen aus Papier oder Karton oder Pappe oder als eine Blechtafel oder als ein Bedruckstoff aus einem Kunststoff ausgebildet, wobei das betreffende Verpackungsmaterial 01 mit einer Transporteinrichtung 13, z. B. auf einem Transportband flach aufliegend, in eine bestimmte Transportrichtung T durch die Druckmaschine 03 oder zumindest entlang einem Wirkungsbereich einer Druckeinrichtung der Druckmaschine 03 transportiert wird. Die Druckmaschine 03 bildet mit ihrer Druckeinrichtung die von ihr zu druckende Kennzeichnung 02 in einem industriellen Druckprozess einfarbig oder mehrfarbig z. B. in einem Tintenstrahldruckverfahren oder in einem Laserdruckverfahren oder in einem Offsetdruckverfahren aus. Auf einem jeden Exemplar des Verpackungsmaterials 01 können eine einzige Kennzeichnung 02, vorzugsweise jedoch jeweils mehrere Kennzeichnungen 02, auch unterschiedliche Kennzeichnungen 02, durch die Druckeinrichtung der Druckmaschine 03 ausgebildet sein.

Zum Ausführen der Prüfung der gedruckten Kennzeichnung 02 werden mit einem vorzugsweise optoelektronischen Bildaufnahmegerät 04 von der betreffenden auf dem Verpackungsmaterial 01 gedruckten Kennzeichnung 02 durch deren fotografische Abbildung digitale Bilddaten erstellt. Dieses vorzugsweise autark und auch räumlich getrennt von der Druckmaschine 03 verwendbare Bildaufnahmegerät 04 ist insbesondere als ein mobiles Gerät, vorzugsweise als ein Smartphone oder als eine Digitalkamera ausgebildet.

Die die betreffende Kennzeichnung 02 auf das Verpackungsmaterial 01 druckende Druckmaschine 03 weist eine i.d.R. digitale Steuereinheit 11 auf, wobei diese Steuereinheit 11 z. B. in einem Leitstand dieser Druckmaschine 03 angeordnet oder als ein Leitstand der Druckmaschine 03 ausgebildet ist. Die Steuereinheit 11 der Druckmaschine 03 ist derart ausgebildet, dass sie Metadaten des aktuellen die betreffende Kennzeichnung 02 auf dem Verpackungsmaterial 01 ausbildenden Druckauftrags über eine erste Datenverbindung an das Bildaufnahmegerät 04 sendet. Das Bildaufnahmegerät 04 sendet dann sowohl die von der aktuell gedruckten Kennzeichnung 02 erfassten Bilddaten und die von der Steuereinheit 11 der Druckmaschine 03 empfangenen Metadaten des aktuellen Druckauftrags über eine zweite Datenverbindung an eine Auswerteeinheit 07. Dabei erfolgt eine Übertragung der von der aktuell gedruckten Kennzeichnung 02 erfassten Bilddaten und die von der Steuereinheit 11 der Druckmaschine 03 empfangenen Metadaten des aktuellen Druckauftrags jeweils an die Auswerteeinheit 07 in etwa zeitgleich, d. h. in einem engen zeitlichen Bezug zueinander. Im Allgemeinen sind Metadaten Informationen zu anderen Daten, wobei diese anderen Daten bei der hier vorliegenden Anwendung insbesondere die Auftragsdaten des betreffenden Druckauftrags sind. Die Auswerteeinheit 07 kann in räumlicher Nähe zum Bildaufnahmegerät 04, d. h. sogar z. B. in einem selben Gerätegehäuse, oder aber räumlich getrennt davon angeordnet sein.

In der Auswerteeinheit 07 werden die Bilddaten mit denjenigen Metadaten, die das mit der Kennzeichnung 02 zu bedruckende Verpackungsmaterial 01 betreffen, in einem Datenpaket miteinander verknüpft, wobei dieses Datenpaket als Prüfprotokoll von der Auswerteeinheit 07 programmgesteuert über eine dritte, bidirektional ausgebildete Datenverbindung an ein ansonsten autark arbeitendes zertifiziertes Prüfsystem 08 übergeben wird, wobei dieses zertifizierte Prüfsystem 08 das Prüfprotokoll insbesondere im Fall seiner normgerechten Ausbildung mit einem Zertifikat versieht und an die Auswerteeinheit 07 zurücksendet. Zudem sendet die Auswerteeinheit 07 programmgesteuert über eine vierte Datenverbindung das mit dem Zertifikat versehene Prüfprotokoll an ein Dokumentenverwaltungssystem 06, in welchem jeweils mit einem Zertifikat versehene Prüfprotokolle archiviert werden. Das Dokumentenverwaltungssystem 06 steht seinerseits über eine fünfte, bidirektional ausgebildete Datenverbindung mit der Steuereinheit 11 der Druckmaschine 03 und über eine sechste, bidirektional ausgebildete Datenverbindung mit einem zur Druckerei gehörenden Management-Information-System 09 jeweils in Verbindung. Ein Vorteil insbesondere dieser zuletzt genannten datentechnischen Vernetzung besteht darin, dass ein mit einem Zertifikat versehenes Prüfprotokoll oder zumindest eine Kopie dieses zertifizierten Prüfprotokolls aus dem Dokumentenverwaltungssystem 06 heraus z. B. einem Kunden des betreffenden Druckauftrags auf einfache Weise z. B. als eine digitale Sendung zur Verfügung gestellt werden kann.

In einer bevorzugten Ausführung ist vorgesehen, dass die Steuereinheit 11 der Druckmaschine 03 mit einem Monitor 12 datentechnisch in Verbindung steht, wobei das während der Abarbeitung eines Druckauftrags erstellte zertifizierte Prüfprotokoll und/oder eine daraus generierte Meldung am Monitor 12 dargestellt ist oder zumindest nach einer z. B. an der Steuereinheit 11 ausgelösten Anforderung darstellbar ist. An der Steuereinheit 11 der die betreffende Kennzeichnung 02 druckenden Druckmaschine 03, insbesondere an dem Monitor 12 dieser Steuereinheit 11, ist z. B. eine Anzahl der bei einem bestimmten Auftrag durchzuführenden Prüfungen der betreffenden zu druckenden Kennzeichnungen 02 eingestellt oder zumindest einstellbar oder auswählbar, wobei einem Bediener der Druckmaschine 03 vorzugsweise ein Zeitpunkt für die Durchführung der jeweiligen Prüfung angezeigt wird.

Die erste Datenverbindung zwischen dem Bildaufnahmegerät 04 und der Steuereinheit 11 der Druckmaschine 03 ist vorzugsweise als WLAN oder als eine Mobilfunkverbindung ausgebildet. Die übrigen vorgenannten Datenverbindungen können z. B. leitungsgebunden oder über WLAN oder über eine Mobilfunkverbindung ausgebildet sein.

Zum Überprüfen der mit dem Bildaufnahmegerät 04 wie einem Smartphone oder einer Digitalkamera ausgeführten Prüfungen kann vorgesehen sein, dass zumindest stichprobenhaft z. B. in einem bestimmten Druckauftrag oder nach einer festgelegten Anzahl von ausgeführten Druckaufträgen Prüfungen zusätzlich auch mit einem herkömmlichen als "stand alone"-Prüfgerät ausgebildeten zertifizierten Prüfgerät ausgeführt werden, wobei dann die Prüfergebnisse des hier vorgeschlagenen Bildaufnahmegeräts 04 mit denjenigen Prüfergebnissen des zertifizierten Prüfgeräts verglichen werden und bei einer Abweichung in den vorgenannten Prüfergebnissen das Bildaufnahmegerät 04 mittels des zertifizierten Prüfgeräts kalibriert wird.

Des Weiteren kann vorgesehen sein, dass das Bildaufnahmegerät 04 beim Ausführen der Prüfung einer gedruckten Kennzeichnung 02 von einer mechanischen Halterung 14 gehalten ist bzw. wird, um einen fest eingestellten Abstand A zur zu prüfenden Kennzeichnung 02 zu gewährleisten. Denn mit einer Verwendung dieser Halterung 14 ist ein reproduzierbarer gleicher Messabstand zwischen dem insbesondere mobilen Bildaufnahmegerät 04 und allen zu prüfenden gedruckten Kennzeichnungen 02 sichergestellt.

Außerdem ist es vorteilhaft, in räumlicher Nähe zum Bildaufnahmegerät 04 eine Aktivierungseinrichtung 16 anzuordnen, wobei diese Aktivierungseinrichtung 16 vorzugsweise über eine NFC-Verbindung oder mittels einer NFC-Funktion (NFC steht für "near field communication" = Nahfeldkommunikation) bei ihrer ereignis- und/oder zeitgesteuerten Auslösung eine im Bildaufnahmegerät 04 installierte App, d. h. ein Programm startet, wobei diese App durch ihre von der Aktivierungseinrichtung 16 vorgenommene Aktivierung das Bildaufnahmegerät 04 automatisch in einen Modus versetzt, in welchem das Bildaufnahmegerät 04 die betreffende auf dem Verpackungsmaterial 01 gedruckte Kennzeichnung 02 fotografisch abbildet und von dieser gedruckten Kennzeichnung 02 die an die Auswerteeinheit 07 zu sendenden digitalen Bilddaten erstellt.

### Bezugszeichenliste

- 01: Verpackungsmaterial
- 02: Kennzeichnung
- 03: Druckmaschine
- 04: Bildaufnahmegerät
- 05: -
- 06: Dokumentenverwaltungssystem
- 07: Auswerteeinheit
- 08: zertifiziertes Prüfsystem
- 09: Management-Information-System
- 10: -
- 11: Steuereinheit
- 12: Monitor
- 13: Transporteinrichtung
- 14: Halterung
- 15: -
- 16: Aktivierungseinrichtung

- A: Abstand
- T: Transportrichtung

## Patentansprüche

1. Verfahren zum Prüfen einer in einer Druckmaschine (03) auf einem Verpackungsmaterial (01) gedruckten Kennzeichnung (02), wobei mit einem Bildaufnahmegerät (04) von der auf dem Verpackungsmaterial (01) gedruckten Kennzeichnung (02) durch deren fotografische Abbildung digitale Bilddaten erstellt werden, wobei eine Steuereinheit (11) der Druckmaschine (03) Metadaten des aktuellen die betreffende Kennzeichnung (02) auf dem Verpackungsmaterial (01) ausbildenden Druckauftrags an das Bildaufnahmegerät (04) sendet, wobei das Bildaufnahmegerät (04) die von der aktuell gedruckten Kennzeichnung (02) erfassten Bilddaten und die von der Steuereinheit (11) der Druckmaschine (03) empfangenen Metadaten des aktuellen Druckauftrags an eine Auswerteeinheit (07) sendet, wobei ein mit einem Zertifikat versehenes Prüfprotokoll dadurch erstellt wird, dass in der Auswerteeinheit (07) die von der aktuell gedruckten Kennzeichnung (02) erfassten Bilddaten und die von der Steuereinheit (11) der Druckmaschine (03) empfangenen Metadaten des aktuellen Druckauftrags miteinander verknüpft werden und dass die Auswerteeinheit (07) das Prüfprotokoll mit dem Zertifikat versieht, **dadurch gekennzeichnet, dass** a) in der Auswerteeinheit (07) die von der aktuell gedruckten Kennzeichnung (02) erfassten Bilddaten und die von der Steuereinheit (11) der Druckmaschine (03) empfangenen Metadaten des aktuellen Druckauftrags in einem Datenpaket miteinander verknüpft werden, b) dass dieses Datenpaket als Prüfprotokoll von der Auswerteeinheit (07) programmgesteuert an ein zertifiziertes Prüfsystem (08) übergeben wird, und c) dass dieses zertifizierte Prüfsystem (08) das Prüfprotokoll mit dem Zertifikat versieht und an die Auswerteeinheit (07) zurücksendet, wobei in räumlicher Nähe zum Bildaufnahmegerät (04) eine Aktivierungseinrichtung (16) angeordnet ist, wobei diese Aktivierungseinrichtung (16) über eine NFC-Verbindung oder mittels einer NFC-Funktion bei ihrer ereignis- und/oder zeitgesteuerten Auslösung ein im Bildaufnahmegerät (04) installiertes Programm startet, wobei dieses Programm derart ausgebildet ist, dass es durch seine von der Aktivierungseinrichtung (16) vorgenommene Aktivierung das Bildaufnahmegerät (04) automatisch in einen Modus versetzt, in welchem das Bildaufnahmegerät (04) die betreffende auf dem Verpackungsmaterial (01) gedruckte Kennzeichnung (02) fotografisch abbildet und von dieser gedruckten Kennzeichnung (02) die an die Auswerteeinheit (07) zu sendenden digitalen Bilddaten erstellt.

2. Verfahren nach Anspruch 1, wobei das Zertifikat die Einhaltung einer die jeweilige Kennzeichnung betreffenden Norm belegt, insbesondere die Norm ISO/IEC 15416 und/oder die Norm ISO/IEC 15415 in ihrer jeweils gültigen Fassung.

3. Verfahren nach Anspruch 1 oder 2, wobei das mit dem Zertifikat versehene Prüfprotokoll von der Auswerteeinheit (07) programmgesteuert an ein Dokumentenverwaltungssystem (06) gesendet und dort archiviert wird.

4. Verfahren nach Anspruch 3, wobei eine Kopie des mit dem Zertifikat versehenen Prüfprotokolls vom Dokumentenverwaltungssystem (06) an ein Management-Information-System (09) gesendet wird.

5. System zum Ausführen des Verfahrens nach einem der Ansprüche 1 bis 4, **dadurch gekennzeichnet, dass** das von der auf dem Verpackungsmaterial (01) gedruckten Kennzeichnung (02) digitale Bilddaten erstellende Bildaufnahmegerät (04) als ein Smartphone oder als eine Digitalkamera ausgebildet ist.

6. System nach Anspruch 5, wobei die Steuereinheit (11) der die betreffende Kennzeichnung (02) druckenden Druckmaschine (03) in einem Leitstand dieser Druckmaschine (03) angeordnet ist.

7. System nach Anspruch 5 oder 6, wobei die Steuereinheit (11) der die betreffende Kennzeichnung (02) druckenden Druckmaschine (03) mit einem Monitor (12) datentechnisch in Verbindung steht, wobei das Prüfprotokoll und/oder eine sich aus dem Prüfprotokoll generierte Meldung jeweils am Monitor (12) dargestellt ist oder zumindest nach einer Anforderung darstellbar ist.

8. System nach Anspruch 5 oder 6 oder 7, wobei an der Steuereinheit (11) der die betreffende Kennzeichnung (02) druckenden Druckmaschine (03) eine Anzahl der bei einem bestimmten Auftrag durchzuführenden Prüfungen der betreffenden zu druckenden Kennzeichnungen (02) einstellbar oder auswählbar ist.

9. System nach Anspruch 8, wobei an dem Monitor (12) dieser Steuereinheit (11) einem Bediener der Druckmaschine (03) ein Zeitpunkt für die Durchführung der jeweiligen Prüfung angezeigt wird.

10. System nach Anspruch 5 oder 6 oder 7 oder 8 oder 9, wobei die auf dem Verpackungsmaterial (01) gedruckte Kennzeichnung (02) in Form eines eindimensionalen oder eines zweidimensionalen Codes ausgebildet ist.

11. System nach Anspruch 5 oder 6 oder 7 oder 8 oder 9 oder 10, wobei das Bildaufnahmegerät (04) beim Ausführen der Prüfung einer gedruckten Kennzeichnung (02) von einer Halterung (14) in einem fest eingestellten Abstand (A) zur zu prüfenden Kennzeichnung (02) gehalten ist.

## Claims

1. Method for verifying a marking (02) printed on a packaging material (01) in a printing machine (03), wherein digital image data are generated by means of an image capture device (04) from the marking (02) printed on the packaging material (01) by photographic imaging thereof, wherein a control unit (11) of the printing machine (03) sends metadata of the current print job forming the relevant marking (02) on the packaging material (01) to the image capture device (04), wherein the image capture device (04) sends the image data captured from the currently printed marking (02) and the metadata of the current print job received from the control unit (11) of the printing machine (03) to an evaluation unit (07), wherein a verification report provided with a certificate is created in that the image data captured from the currently printed marking (02) and the metadata of the current print job received from the control unit (11) of the printing machine (03) are linked to one another in the evaluation unit (07) and in that the evaluation unit (07) provides the verification report with the certificate, **characterized in that** a) in the evaluation unit (07) the image data captured from the currently printed marking (02) and the metadata of the current print job received from the control unit (11) of the printing machine (03) are linked to one another in a data packet, b) **in that** this data packet is transferred as a verification report by the evaluation unit (07), under program control, to a certified verification system (08), and c) **in that** this certified verification system (08) provides the verification report with the certificate and sends it back to the evaluation unit (07), wherein an activation device (16) is arranged in spatial proximity to the image capture device (04), wherein this activation device (16), via an NFC connection or by means of an NFC function, upon its event-controlled and/or time-controlled triggering, starts a program installed in the image capture device (04), wherein this program is designed such that, by its activation performed by the activation device (16), it automatically puts the image capture device (04) into a mode in which the image capture device (04) photographically images the relevant marking (02) printed on the packaging material (01) and creates, from this printed marking (02), the digital image data to be sent to the evaluation unit (07).

2. Method according to claim 1, wherein the certificate attests compliance with a standard relating to the respective marking, in particular the standard ISO/IEC 15416 and/or the standard ISO/IEC 15415 in their respectively valid version.

3. Method according to claim 1 or 2, wherein the verification report provided with the certificate is sent by the evaluation unit (07), under program control, to a document management system (06) and is archived there.

4. Method according to claim 3, wherein a copy of the verification report provided with the certificate is sent from the document management system (06) to a management information system (09).

5. System for carrying out the method according to one of claims 1 to 4, **characterized in that** the image capture device (04) creating digital image data from the marking (02) printed on the packaging material (01) is designed as a smartphone or as a digital camera.

6. System according to claim 5, wherein the control unit (11) of the printing machine (03) printing the relevant marking (02) is arranged in a control station of this printing machine (03).

7. System according to claim 5 or 6, wherein the control unit (11) of the printing machine (03) printing the relevant marking (02) is connected to a monitor (12) for data communication, wherein the verification report and/or a message generated from the verification report is in each case displayed on the monitor (12) or can at least be displayed upon request.

8. System according to claim 5 or 6 or 7, wherein, at the control unit (11) of the printing machine (03) printing the relevant marking (02), a number of the verifications to be carried out in a specific job for the relevant markings (02) to be printed can be set or selected.

9. System according to claim 8, wherein, at the monitor (12) of this control unit (11), a point in time for carrying out the respective verification is displayed to an operator of the printing machine (03).

10. System according to claim 5 or 6 or 7 or 8 or 9, wherein the marking (02) printed on the packaging material (01) is designed in the form of a one-dimensional or a two-dimensional code.

11. System according to claim 5 or 6 or 7 or 8 or 9 or 10, wherein the image capture device (04), when carrying out the verification of a printed marking (02), is held by a holder (14) at a fixedly set distance (A) from the marking (02) to be verified.

## Revendications

1. Procédé de vérification d'un marquage (02) imprimé sur un matériau d'emballage (01) dans une machine d'impression (03), dans lequel des données d'image numériques sont créées au moyen d'un dispositif de capture d'images (04) à partir du marquage (02) imprimé sur le matériau d'emballage (01) par reproduction photographique de celui-ci, dans lequel une unité de commande (11) de la machine d'impression (03) envoie au dispositif de capture d'images (04) des métadonnées du travail d'impression en cours formant le marquage (02) concerné sur le matériau d'emballage (01), dans lequel le dispositif de capture d'images (04) envoie à une unité d'évaluation (07) les données d'image acquises à partir du marquage (02) actuellement imprimé et les métadonnées du travail d'impression en cours reçues de l'unité de commande (11) de la machine d'impression (03), dans lequel un rapport de vérification muni d'un certificat est créé du fait que les données d'image acquises à partir du marquage (02) actuellement imprimé et les métadonnées du travail d'impression en cours reçues de l'unité de commande (11) de la machine d'impression (03) sont associées entre elles dans l'unité d'évaluation (07) et du fait que l'unité d'évaluation (07) munit le rapport de vérification du certificat, **caractérisé en ce que** a) dans l'unité d'évaluation (07), les données d'image acquises à partir du marquage (02) actuellement imprimé et les métadonnées du travail d'impression en cours reçues de l'unité de commande (11) de la machine d'impression (03) sont associées entre elles dans un paquet de données, b) **en ce que** ce paquet de données est transmis en tant que rapport de vérification par l'unité d'évaluation (07), sous commande de programme, à un système de vérification certifié (08), et c) **en ce que** ce système de vérification certifié (08) munit le rapport de vérification du certificat et le renvoie à l'unité d'évaluation (07), dans lequel un dispositif d'activation (16) est agencé à proximité spatiale du dispositif de capture d'images (04), dans lequel ce dispositif d'activation (16), par l'intermédiaire d'une liaison NFC ou au moyen d'une fonction NFC, lors de son déclenchement commandé par événement et/ou par le temps, lance un programme installé dans le dispositif de capture d'images (04), dans lequel ce programme est conçu de telle sorte que, par son activation effectuée par le dispositif d'activation (16), il place automatiquement le dispositif de capture d'images (04) dans un mode dans lequel le dispositif de capture d'images (04) reproduit photographiquement le marquage (02) concerné imprimé sur le matériau d'emballage (01) et crée, à partir de ce marquage (02) imprimé, les données d'image numériques à envoyer à l'unité d'évaluation (07).

2. Procédé selon la revendication 1, dans lequel le certificat atteste le respect d'une norme concernant le marquage respectif, en particulier la norme ISO/IEC 15416 et/ou la norme ISO/IEC 15415 dans leur version respectivement en vigueur.

3. Procédé selon la revendication 1 ou 2, dans lequel le rapport de vérification muni du certificat est envoyé par l'unité d'évaluation (07), sous commande de programme, à un système de gestion de documents (06) et y est archivé.

4. Procédé selon la revendication 3, dans lequel une copie du rapport de vérification muni du certificat est envoyée par le système de gestion de documents (06) à un système d'information de gestion (09).

5. Système pour la mise en œuvre du procédé selon l'une des revendications 1 à 4, **caractérisé en ce que** le dispositif de capture d'images (04) créant des données d'image numériques à partir du marquage (02) imprimé sur le matériau d'emballage (01) est réalisé sous la forme d'un smartphone ou d'un appareil photo numérique.

6. Système selon la revendication 5, dans lequel l'unité de commande (11) de la machine d'impression (03) imprimant le marquage (02) concerné est agencée dans un poste de commande de cette machine d'impression (03).

7. Système selon la revendication 5 ou 6, dans lequel l'unité de commande (11) de la machine d'impression (03) imprimant le marquage (02) concerné est reliée à un moniteur (12) pour la communication de données, dans lequel le rapport de vérification et/ou un message généré à partir du rapport de vérification est respectivement affiché sur le moniteur (12) ou peut au moins être affiché sur demande.

8. Système selon la revendication 5 ou 6 ou 7, dans lequel, au niveau de l'unité de commande (11) de la machine d'impression (03) imprimant le marquage (02) concerné, un nombre des vérifications à effectuer lors d'un travail déterminé pour les marquages (02) concernés à imprimer est réglable ou sélectionnable.

9. Système selon la revendication 8, dans lequel, sur le moniteur (12) de cette unité de commande (11), un instant pour l'exécution de la vérification respective est indiqué à un opérateur de la machine d'impression (03).

10. Système selon la revendication 5 ou 6 ou 7 ou 8 ou 9, dans lequel le marquage (02) imprimé sur le matériau d'emballage (01) est réalisé sous la forme d'un code unidimensionnel ou d'un code bidimensionnel.

11. Système selon la revendication 5 ou 6 ou 7 ou 8 ou 9 ou 10, dans lequel le dispositif de capture d'images (04), lors de l'exécution de la vérification d'un marquage (02) imprimé, est maintenu par un support (14) à une distance (A) réglée de manière fixe du marquage (02) à vérifier.
